# Europäisches Patentamt
# European Patent Office
# Office européen des brevets

(11) Publication number: **O 037 121 B1**

(12) **EUROPEAN PATENT SPECIFICATION**

(45) Date of publication of patent specification: **04.07.84**

(51) Int. Cl.³: **H 01 M 2/06, H 01 M 6/04**

(21) Application number: **81102429.8**

(22) Date of filing: **31.03.81**

(54) **Improvements in alkaline cells.**

(30) Priority: **01.04.80 JP 42143/80**

(43) Date of publication of application:
**07.10.81 Bulletin 81/40**

(45) Publication of the grant of the patent:
**04.07.84 Bulletin 84/27**

(84) Designated Contracting States:
**BE DE FR GB**

(56) References cited:
**GB - A - 1 338 780**
**US - A - 3 318 737**

(73) Proprietor: **Hitachi Maxell Ltd.**
**No 1-1-88, Ushitora Ibaraki-shi**
**Osaka-fu (JP)**

(72) Inventor: **Koide, Koji**
**2-3, Miyano-cho Takatsuki**
**Osaka (JP)**
Inventor: **Iwamaru, Tugiyasu**
**8-11-207, Showaen Settsu**
**Osaka (JP)**
Inventor: **Urade, Makoto**
**1-4, Aobaokaminami Suita**
**Osaka (JP)**

(74) Representative: **von Kreisler, Alek, Dipl.-Chem.**
**et al,**
**Deichmannhaus am Hauptbahnhof**
**D-5000 Köln 1 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to an improvement in cells. More particularly, it relates to an improvement in internal structures of cylindrical alkaline cells to provide an excellent leakproof property by appropriately protecting a gasket which supports a negative collector and seals the opening of a positive can.

An alkaline electrolyte, which is contained in the cylindrical alkaline cell, is apt to creep along the surface of a metal, resulting in leakage of the electrolyte to the outside of the cell. Therefore, the cylindrical alkaline cell requires a completely effective sealing.

The leakage of an electrolyte in a cylindrical alkaline cell is due to the creepage of the electrolyte partly along a positive can which is usually made of iron, and partly along a negative collector which is usually made of a copper alloy. However, a notable leakage occurring within a short time after production of the cell is mostly attributed to the latter, i.e., the creepage of the electrolyte along the negative electrode.

Many attempts have heretofore been made to prevent the leakage of an electrolyte. Some of them, which are disclosed in USP No. 3,218,197; No. 3,069,489; No. 3,042,734 and No. 3,663,301, are somewhat related to our invention. The construction of a cylindrical alkaline cell which is most closely related to our invention is explained below.

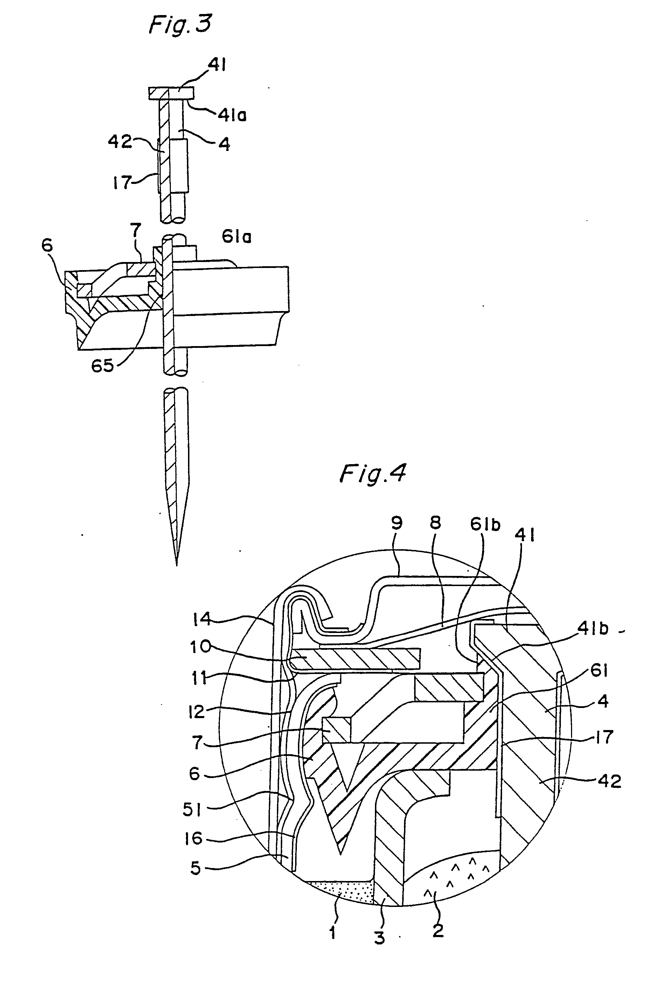

A positive can, which is closed at the bottom and packed with the positive and negative chemical elements therein, is appropriately shaped to provide an inwardly projecting annular shoulder at a position slightly below the open end of the can. The shoulder serves for receiving a sealing member for closing the opening of the can. The sealing member consists of a resilient gasket with a central bore, the external wall of which contacts with the positive can, a metallic washer, internal and external rims of which are pressed in and held by the gasket, and a nail-shaped negative collector received and supported by the central bore of the gasket. The diameter of the bore of the gasket is slightly smaller than that of the shank of the negative collector. Thus, the washer and the shank of the negative collector radially presses the gasket. Therefore, the contacting surfaces of the positive can, the gasket and the negative collector are closely contacted one another to avoid leakage of the electrolyte from the contacting surfaces. Details of the structure of the cylindrical alkaline cell previously known and mentioned above are more fully explained below referring to Fig. 4 in the accompanying drawings.

A nail-shaped negative collector 4 has a downwardly converging tapered shank 41b between a head 41 and an elongated main shank 42. The top end of an inner axial projection of a gasket 61b is tapered so as to fit the tapered shank 41b.

A leaf spring 8 contacting the upper edge of the head of the negative collector and a negative electrode terminal plate 9 contacting the leaf spring 8 press the head of the negative collector in a direction axially inwardly of a positive can. On the other hand, the inner axial projection 61 of the gasket is radially inwardly pressed by a washer 7. Thus, the tapered shank 41b and the upper part of the elongated main shank 42 adjacent to the tapered shank 41b are pressfitted to the inner wall of the projection 61, so that the leakage of electrolyte through the contacting surface therebetween can be effectively prevented.

The diameter of the washer aperture is smaller than that of the nail head of the negative collector so that the entire negative collector may not sink into the central bore of the gasket when the former is pressed into the latter. Thus, the top end of the inner projection of the gasket is sandwiched between the tapered shank 61b and an angular edge of the aperture of the washer. In such structure, since the angular edge serves as a knife, the top end of the inner projection is easy to break when the negative collector is compulsively pressed into the central bore of the gasket or while it receives a pressure by the leaf spring for a prolonged period of time. Once the top end of the inner projection of the gasket breaks, the electrolyte leaks out of the cell through the break.

Between the contacting surface of the gasket 6 and the negative collector 4, a liquid sealing material 17 such as asphalt pitch is usually interposed. For this purpose, the sealing material is applied to the surface of the shank of the negative collector, and the latter is pressed into the bore of the gasket, whereby the sealing material is pushed up to the uppersurface of the nail head by the contact pressure between the gasket and the shank of the negative collector. The sealing material moved to the uppersurface of the nail head causes an inferior electrical contact between the negative collector and the leaf spring. Furthermore, the length of the protruding portion of the negative collector beyond the top end of the inner projection of the gasket is liable to change due to the sealing material present on the surface of the tapered shank of the negative collector, which also leads to the inferior electrical contact and/or irregularity of the cell in size.

The present invention is directed to cylindrical alkaline cells having an improved internal structure, in which the gasket, pressure-fitted between the negative collector and the washer, is protected from breakage, and a liquid sealing material on the contact surface between the negative collector and the gasket causes neither any electrical contact trouble nor irregularity of the cell in size.

Thus, the object of the present invention is to provide a cylindrical alkaline cell which comprises:

a cylindrical alkaline cell which comprises

(1) a positive can having an inwardly protruding annular shoulder at a position slightly below the open end of the can,

(2) positive and negative chemical elements filled in the positive can,

(3) a sealing assembly for the opening of the positive can mounted on said annular shoulder of the positive can, said sealing assembly comprising

(A) an annular gasket having a central bore and having inner and outer axial annular projections protruding respectively from the inner and outer peripheral edges thereof,

(B) an annular metallic washer, inner and outer peripheral edges of which are wedged into the inner and outer projections of said gasket,

(4) a nail-shaped negative collector inserted in and supported by said central bore of the gasket, said collector having a head

and an elongated shank, the diameter of which is slightly larger than that of the bore of said gasket, characterized in that the diameter of said head is larger than that of the aperture in said washer and the undersurface of said head is substantially parallel to the uppersurface of the inner peripheral portion of said washer so that the portion of the gasket between said surfaces may be uniformly pressed.

A preferred embodiment of the present invention will be described below with reference to the drawings.

Fig. 1 is a longitudinal view of the cylindrical alkaline cell of the present invention with a portion shown in cross-section;

Fig. 2 is an enlarged view of the sealing portion thereof;

Fig. 3 is a longitudinal view, with a portion shown in cross-section, of the negative collector before it is completely fitted to the gasket; and

Fig. 4 is an enlarged cross-sectional view of the sealing portion in the conventional cylindrical alkaline cell.

In the drawings, a positive active material 1 comprising mainly manganese dioxide, a paste-form negative active material 2 comprising an amalgamated zinc powder, an alkaline electrolyte, and carboxymethyl cellulose, a separator 3 comprising vinylon/rayon mixed paper for separating the positive active material 1 from the negative active material 2, and a negative collector 4 are assembled in a positive can 5, and a synthetic resin gasket 6 seals the open end of the positive can 5. The gasket 6 is composed of an inner axial annular projection 61 around the central bore 65, an outer axial annular projection 62 adjacent the inner circumferential surface of the opening of the positive can 5, a flat portion 63 which substantially shuts and seals the inside of the cell from its outside, and a V-form portion 64 for holding the top end of the separator. Thus, end portions 63 and 64 serve for connecting the above inner annular projection 61 and the outer annular projection 62. Into the opening 65 a negative collector 4 is inserted under pressure, and in the intermediate portion between the inner annular projection 61 and the outer annular projection 62 there is accommodated an annular washer 7 having an opening 71. The positive can 5 has an inwardly protruding annular shoulder 51 at a position near the open end thereof for receiving the gasket 6. A bottom of the outer annular projection 62 of the gasket 6 is mounted on the annular shoulder 51, and the portion extending from the shoulder 51 to the open end of the positive can 5 is tightened in a radial direction to contact the outer annular projection 62 of the gasket 6, by which the opening of the positive can 5 is sealed. The outside diameter of the tightening portion, i.e., the sealing portion 52 of the positive can 5, is smaller than the outside diameter of the portion other than said tightening portion, i.e., the collector member 53. With regard to the size difference between the sealing portion 52 and the collector member 53, the outside diameter of the sealing portion 52 is preferably made smaller than that of the collector member 53 by more than the can thickness. Also, compression of the outer annular projection 62 of the gasket 6 by tightening of the positive can 5 is preferably effected to a degree to make the rate of decrease in the original thickness of the gasket or the compression rate in the range of 10 to 40%.

A leaf spring 8 is accommodated between the negative collector 4 and the negative electrode terminal plate 9. The leaf spring 8 is disposed to press the head 41 of the negative collector 4 in an axial direction at its center and is in contact with the negative electrode terminal plate 9 at its peripheral portion. The head 41 of the negative collector 4 is formed to have a diameter larger than that of the aperture of said washer 7. The undersurface 41a of the head is horizontally formed. Said undersurface 41a is in contact with the horizontal uppersurface 61a of the inner annular projection 61 around the central bore 65 of the gasket 6. The shank 42 of the negative collector has a diameter slightly larger than that of the central bore 65 of the gasket.

Reference numeral 10 is a paper ring for insulation between the sealing portion 52 of the positive can 5 and the negative electrode terminal plate 9; 11 and 12 are the resin tubes; 13 is a positive electrode terminal plate; 14 is a casing can; 15 is a resin ring; 16 is a liquid sealing material such as asphalt compound (a mixture of blown asphalt with process oil), aliphatic polyamide, fluorine oil, etc. applied to the inside surface of the sealing portion 52 of the positive can 5; and 17 is a liquid sealing material applied around the negative collector 4.

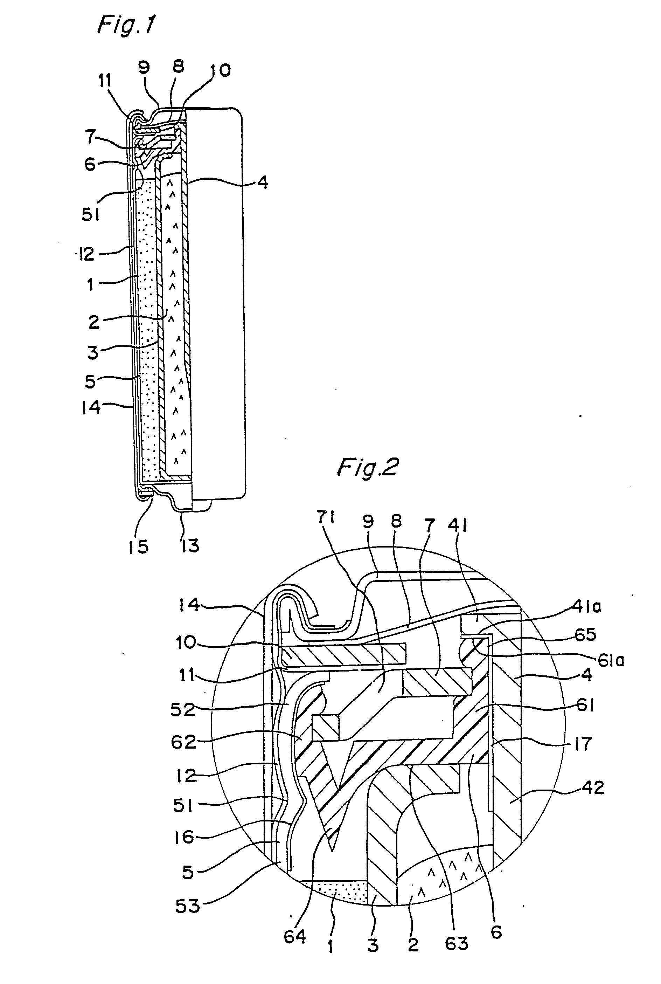

The liquid sealing material 17 applied around the negative collector 4 is preferably evenly spread over the surface of the shank of the negative collector 4 by inserting the negative collector, the shank of which has been coated with the sealing material, into the gasket 6 while permitting the liquid sealing material 17 to spread through the gasket 6. For this purpose, it is preferred that the sealing material is applied to the portion of the shank remote from the undersurface 41a of the head (refer to Fig. 2). However, the application to the portion of the shank far remote from the undersurface of the head is not desirable because the sealing material may contact the negative active material.

As described above, in the present invention, the undersurface 41a of the head of the negative collector 4 is substantially parallel to the uppersurface 61a of the inner projection of the gasket 6. Therefore, the top end of the inner projection of the gasket sandwiched between the washer and the head of the negative collector is not cut by the inside edge of the washer, and the negative collector 4 is not floated up from the gasket 6 by the radial clamping force of the positive can 5. Moreover, since the height of protrusion of the head 41 of the negative collector 4 from the gasket 6 is fixed and remains unchangeable irrespective of the magnitude of insertion pressure of the negative collector into the gasket, any inferior electrical contact and/or irregularity of cell size can be avoided.

Furthermore, since the gasket 6 is pressure-fitted to the negative collector 4 by both radial clamping force due to the washer 7, which serves for pressing the inner projection of the gasket to the shank of the negative collector, and axial pressing force due to the leaf spring 8, which serves for pressing the undersurface of the head of the negative collector to the uppersurface of the inner projection of the gasket, leakage of the electrolyte out of the cell is successfully avoided.

## Claims

1. A cylindrical alkaline cell which comprises
(1) a positive can having an inwardly protruding annular shoulder at a position slightly below the open end of the can,
(2) positive and negative chemical elements filled in the positive can,
(3) a sealing assembly for the opening of the positive can mounted on said annular shoulder of the positive can, said sealing assembly comprising
(A) an annular gasket having a central bore and having inner and outer axial annular projections protruding respectively from the inner and outer peripheral edges thereof,
(B) an annular metallic washer, inner and outer peripheral edges of which are wedged into the inner and outer projections of said gasket,
(4) a nail-shaped negative collector inserted in and supported by said central bore in the gasket, said collector having a head and an elongated shank, the diameter of which is slightly larger than that of the bore in said gasket, characterized in that the diameter of said head is larger than that of the aperture in said washer and that the undersurface of said head is substantially parallel to the uppersurface of the inner peripheral portion of said washer so that the portion of the gasket between said surfaces may be uniformly pressed.

2. The cylindrical alkaline cell according to claim 1, wherein a liquid sealing material is applied to the surface of contact of the negative collector to the gasket.

3. The cylindrical alkaline cell according to claim 1 or 2, further comprising a leaf spring for pressing the negative collector in a direction axially inwardly of said can.

## Patentansprüche

1. Zylindrische alkalische Zelle mit
(1) einer positiven Dose mit einer innenseitig vorspringenden ringförmigen Schulter in einer Position geringfügig unterhalb des offenen Endes der Dose,
(2) in die Dose eingefüllten, positiven und negativen Zell-Elementen,
(3) ein auf der ringförmigen Schulter der positiven Dose angebrachtes Dichtungsverbundsystem mit
(A) einer ringförmigen Dichtungsscheibe mit einer zentralen Bohrung und inneren und äußeren Vorsprüngen an ihrem inneren bzw. äußeren Umfang,
(B) einer ringförmigen metallischen Unterlagsscheibe, deren innere und äußere Umfangskanten in den inneren und äußeren Vorsprüngen der Dichtungsscheibe verkeilt sind,
(4) einem in die zentrale Bohrung in der Dichtungsscheibe eingesetzten und von dieser gehaltenen nagelförmigen negativen Kollektor, der einen Kopf und einen länglichen Schaft besitzt, dessen Durchmesser geringfügig größer ist als derjenige der Bohrung in der Dichtung, dadurch gekennzeichnet, daß der Durchmesser des Kopfes größer ist als derjenige der Öffnung in der Unterlagsscheibe und daß die Unterseite des Kopfes im wesentlichen parallel zu der Oberseite des inneren Umfangsteils der Unterlagsscheibe ist, so daß der Teil der Dichtungsscheibe zwischen den beiden Flächen gleichmäßig gepreßt werden kann.

2. Zylindrische alkalische Zelle nach Anspruch 1, dadurch gekennzeichnet, daß ein flüssiges Dichtungsmaterial auf die Kontakt-Oberfläche des negativen Kollektors mit der Dichtungsscheibe aufgetragen wird.

3. Zylindrische alkalische Zelle nach Anspruch 1 oder 2, dadurch gekennzeichnet, daß sie weiterhin eine Blattfeder enthält, die den negativen Kollektor in axialer Richtung einwärts in die Dose preßt.

## Revendications

1. Pile alcaline cylindrique comprenant:
(1) un boîtier positif possédant un épaulement annulaire faisant saillie vers l'intérieur, en une position légèrement en dessous de l'extrémité ouverte du boîtier;

(2) des éléments chimiques positifs et négatifs chargés dans le boîtier positif;

(3) un ensemble d'étanchéité ou d'herméticité pour l'ouverture du boîtier positif, monté sur ledit épaulement annulaire du boîtier positif, cet ensemble d'étanchéité ou d'herméticité comprenant

(A) un joint annulaire comportant une ouverture centrale et possédant des prolongements annulaires axiaux interne et externe faisant saillie respectivement de ses bords périphériques interne et externe,

(B) une rondelle métallique annulaire dont les bords périphériques interne et externe sont coincés ou calés dans les prolongements interne et externe du joint en question,

(4) un collecteur négatif en forme de clou introduit dans et supporté par le trou central précité du joint, le collecteur comportant une tête et une tige allongée dont le diamètre est légèrement supérieur à celui du trou du joint précité, la pile se caractérisant en ce que le diamètre de ladite tête est supérieur à celui de l'ouverture ménagée dans ladite rondelle et la surface inférieure de ladite tête est sensiblement parallèle à la surface supérieure de la partie périphérique interne de ladite rondelle, de façon que la partie du joint entre lesdites surfaces puisse être uniformément pressée.

2. Pile alcaline cylindrique suivant la revendication 1, caractérisée en ce que la matière d'étanchéité ou d'herméticité liquide est appliquée sur la surface de contact du collecteur négatif avec le joint.

3. Pile alcaline cylindrique suivant l'une quelconque des revendications 1 et 2, caractérisée en ce qu'elle comprend également un ressort à lame pour presser le collecteur négatif dans la direction axialement vers l'intérieur dudit boîtier.

*Fig.1*

*Fig.2*

1

*Fig.3*

*Fig.4*